**Europäisches Patentamt**

(19) **European Patent Office**

**Office européen des brevets**

(11) Publication number : **0 062 017**
**B1**

(12) # EUROPEAN PATENT SPECIFICATION

(45) Date of publication of patent specification :
23.05.84

(21) Application number : 82850055.3

(22) Date of filing : 18.03.82

(51) Int. Cl.³ : **F 04 C   2/08**, B 29 F   3/012,
B 29 H   3/08

(54) **Force pump.**

(30) Priority : 27.03.81 SE 8101983

(43) Date of publication of application :
06.10.82 Bulletin 82/40

(45) Publication of the grant of the patent :
23.05.84 Bulletin 84/21

(84) Designated contracting states :
AT CH DE FR GB IT LI

(56) References cited :
GB-A-   117 097
GB-A-   638 364
SE-A-   320 188

(73) Proprietor : **JOCHNICK & NORRMAN PRESS AB**
**Box 2236**
**S-331 02 Värnamo (SE)**

(72) Inventor : **Larsson, Gösta**
**Prinsgatan 15**
**S-331 00 Värnamo (SE)**

(74) Representative : **Grennberg, Erik Bertil et al**
**H ALBIHNS PATENTBYRA AB Box 7664**
**S-103 94 Stockholm (SE)**

Note : Within nine months from the publication of the mention of the grant of the European patent, any person may give
notice to the European Patent Office of opposition to the European patent granted. Notice of opposition shall be filed in
a written reasoned statement. It shall not be deemed to have been filed until the opposition fee has been paid (Art. 99(1)
European patent convention).

## Description

The invention relates to a gear pump for injection molding and extrusion of rubber and other elastomers, comprising two gears mounted in a housing and standing in engagement with each other, two entrance holes for introduction of strip starting material into the spaces between the gears and the housing, and channel means for discharging the product out of the area where the gears are in engagement, the gears being provided at their middles with circumferential grooves against which the gear teeth terminate.

A gear pump having said characteristics is known from British patent 117 097. This gear pump for extruding rubber and the like is constructed primarily for obtaining rubber pipe, and a sleeve is mounted between the gears in the place created by the circumferential grooves where the gears meet. A cable may be drawn through the sleeves through a die where the channel means end in a die, so that in the extrusion process, a rubber covered cable is obtained.

In extrusion and injection molding of rubber and similar materials, it is usual to allow the product to be pressed and subjected to shearing forces and be freed of gases, attempting to achieve a suitable rise in temperature and initial vulcanization. It is suitable to achieve a degree of vulcanization at discharge of about 75 %. The most common means used is a screw arrangement resembling a meat grinder. These machines are however rather expensive because of the necessary precision due to the high pressures required (several hundred kg/cm²).

An alternative device has been designed by us and is described in Swedish Lay-Open Print 320 188. As in the above-mentioned British patent, it is not based on the screw principle but on the principle of the gear pump. The starting material used is in the form of strips of the same width as the gears and two identical strips are inserted in individual slots into the space between the gears and the housing in which the gears rotate. The strips are thereby chopped into pieces fitting into the tooth spaces and these pieces are then transported to the region where the gears of the gear pump engage, where the rubber is pressed outwards towards the channels in the ends of the housing. Thus, the rubber is masticated primarily when moved axially in the gear spaces and possibly further in the channels, depending on their design. The principle of the gear-pump used in the British patent is very similar, in that it may be seen as two gear pumps of the same type, where a strip of rubber is entered on each side of the sleeve, which is mounted in between, although the exits from the gears are joined into a collector chamber circumscribing the output end of the sleeve.

One advantage of using a gear pump is that a gear pump is relatively inexpensive to manufacture. Another advantage is that the dimensions of a gear pump are rather small, and above all the longitudinal dimension is in no way comparable to that required in a screw pump of the type in question. A screw injector with a capacity of 25 kg/min. can for example be 4-5 meters long and weigh 7-8 tons. Furthermore, since a screw pump is substantially less efficient than a gear pump, the power consumption will be greater for the same work and can be estimated to be about three times greater.

Thus, many factors indicate the preferability of a gear pump over a screw pump in principle. However, our experience has demonstrated that the gear pump design has a number of disadvantages. A particular weakness has been the problem of sealing. For obvious reasons, it is impossible to make a gear pump without clearance between the circular end surfaces of the gears and the pump housing. The pressure on the rubber is considerable ; often about 500 kg/cm², and rubber will be pressed into the space between the gear and pump housing, and it is difficult to prevent rubber from penetrating into the gear bearing, even though scrapers and the like are arranged. Rubber contains additives which are abrasive in many cases, the practical result being that the bearing packings must be replaced after processing about 60-70 tons of material.

Another disadvantage of our own previous design is that the mastication has been exclusively concentrated to the region where the gear teeth engage, the gear teeth only functioning as conveyor means for the chopped pieces of rubber strips before engagement.

One purpose of the present invention is to achieve a gear pump of the type described in the introduction, which avoids said disadvantages. This is achieved according to the invention by a gear pump for injection molding and extrusion of rubber and other elastomers which has the features disclosed in the characterizing clause of Claim 1.

According to the invention, this is achieved by subjecting the product to pressure as soon as it has reached the dividing-and-sealing members in the gear grooves, which members divide the strip starting material which is forced into the tooth spaces. On the other side of said members, the space in the groove will act as a connection between the tooth spaces which will not merely transport the chopped pieces of rubber. The pressure created at tooth engagement will thus be able to be propagated via the groove back to the dividing-and-sealing means and thus to all the intermediate tooth spaces. Furthermore, by virtue of the fact that the discharge of the masticated product will take place in the middle instead of at the ends of the gears, the sealing problems at the ends of the gears will be substantially alleviated. One should make special note of the fact that the rubber will be first moved outwards in the tooth spaces and then inwards towards the middle, both increasing and distributing the mastication effect.

In accordance with a preferred embodiment, the gears are herringbone gears with the central groove of each gear passing through the intersection of the gear tooth lines. The direction of rotation of the gears is such that the portion of each tooth closest to the groove is the last portion of each tooth to enter into engagement. Thus gradual engagement is obtained in each tooth space, pressing the rubber therein towards the middle. This further improves the mastication and also alleviates the sealing problem at the ends of the gears in the region of gear engagement, where the difficulties were previously greatest.

Suitable dividing-and-sealing members can comprise cylinders inserted into the grooves. These can completely fill the width of the groove, but according to an alternative embodiment, sharp edged members are fitted into the grooves and point counter to the direction of movement of the gears. These members are anchored against being pulled along by the rotating gears by bolts inserted from the outside and fastened in the gear pump housing and sticking into holes in the members filling the entire width of the grooves.

The invention will now be described in more detail with reference to non-limiting examples, which are illustrated in the figures.

Figure 1 shows a schematic view of a gear pump.

Figure 2 shows an exploded view of the gears in the gear pump, a tongue and dividing-and-sealing members.

Figure 3 shows a section through the gear pump in a plane through the circumferential grooves of the gears.

Figure 4 shows another embodiment of the dividing-and-sealing member.

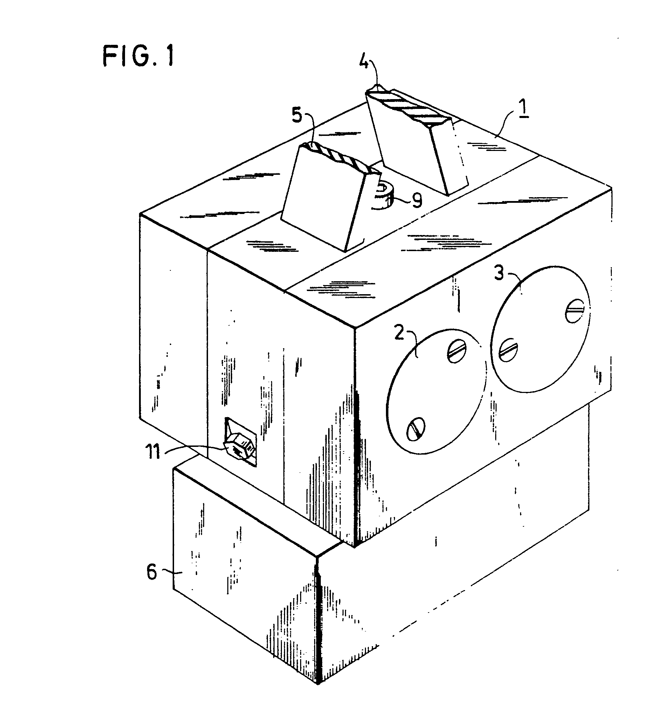

Fig. 1 shows a gear pump 1 for rubber and other elastomer products which are fed in the form of strips 4 and 5 into the pump and which are discharged in the form of masticated material into a mold 6 or the like. The schematic figure, which does not show the drive side where one of the gears is driven by a drive shaft, only shows the ends 2 and 3 of the gears.

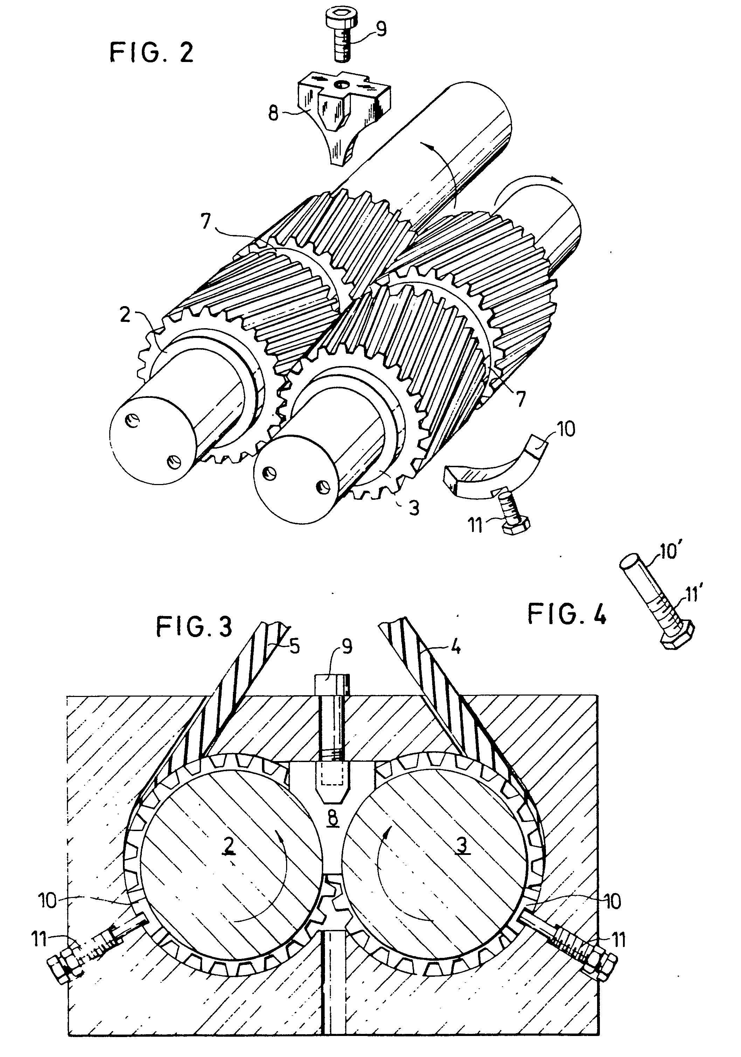

Fig. 2 shows the two gears 2 and 3 in an exploded view, and Fig. 3 shows a section through the circumferential grooves 7 of the gears. As can be seen from these figures, the gears are provided with grooves 7, rectangular in section, which lie approximately in the middle of the toothed portions and are somewhat deeper than the tooth spaces. At engagement, a gap will be created limited by two cylindrical surfaces and two planar surfaces. Into this gap there is inserted a tongue 8 in a direction counter to the rotational movement of the gears, said tongue 8 being defined by two planar surfaces and two cylindrical surfaces designed to fit against the two said cylindrical surfaces at gear engagement. The tongue 8 is pressed down by means of a screw 9 which is screwed against the tongue 8 from the pump housing.

Figs. 2 and 3 also show members 10 inserted into the grooves somewhat below the common centerplane of the gears. These members divide the inserted rubber strips 4 and 5 and press the divided strip portions into the tooth spaces. The members 10 are of such shape that they substantially fill out the space formed between the cylindrical wall of the housing and the walls of the circumferential grooves 7, and thus they are able to maintain a pressure in the gear pump between said members and the region of engagement between the gears. The members are anchored from the outside by means of screwed-in bolts 11.

Members as shown in Fig. 4 have proved even more advantageous. Screws 11' are screwed into the housing 1 in the same manner as the bolts 11, but the screws have cylindrical end portions 10'. This makes it possible to regulate the proportion of elastomer which leaks back through the grooves 7, to be pressed through once again. In this way the degree of mastication can be controlled so that the temperature of the output rubber can be varied between about 40° and 100 °C. Furthermore, the members will not become as hot, thus substantially improving reliability.

As can be seen in Fig. 2, the gears are cut at an angle in herringbone fashion, with the gear teeth oppositely inclined on either side of the grooves 7. It can also be seen from the figure that the rotational direction of the gears is such that the outermost portions, as viewed along the axes of the gears, of the teeth first enter into engagement, thus emptying the tooth spaces by gear engagement inwardly towards the middle, thus alleviating pressure and sealing problems at the ends of the gears.

As in known gear pumps for the same purposes, sealing-and-scraping means are arranged in the space between the flat end portions of the gears and the gear housing. Since such sealing and scraping means are previously known, they will not be described in more detail here. It is worthy of remark, however, that with the present invention a sharp decrease in the strain on these seals is achieved so that substantially higher pressures can be achieved, using the same types of sealing means, than was previously possible.

In one embodiment of the invention, the outer diameter of the gears was 198 mm, the gears were cut with a normal module of 5, helix angle 15°, pressure angle 20° and number of teeth 36. The pump is driven by a hydraulic motor with a power of 90 kW at about 70 r.p.m., resulting in a processing rate of about 25 kg of rubber per minute. Improved mastication can reduce the vulcanizing time in the mold by about 25 %. The advantage of using a hydraulic motor is that the gear pump is portable, so that it can serve several different presses and the moved from mold to mold, thereby exploiting ist full capacity.

**Claims**

1. Gear pump for injection molding and extrusion of rubber and other elastomers, comprising two gears (2, 3) mounted in a housing and in engagement with each other, two entrance holes for introduction of strip starting material (4, 5) into the spaces between the gears (2, 3) and the housing, and channel means for discharging the product out of the region where the gears are in engagement, the gears being provided at their middles with circumferential grooves (7) against which the gear teeth terminate, characterized in that a tongue (8) is sealingly inserted into said grooves (7) between the gears (2, 3) in the region where they are in engagement, said tongue (8) pointing counter to the direction of rotation of the gears (2, 3) ; that dividing-and-sealing members (10, 11) are inserted into the grooves (7) of the two gears (2, 3) at locations in the housing located between the region where the gears (2, 3) are in engagement and the respective entrance hole ; and that the channel means are in the form of a channel disposed at the circumferential grooves (7) and opposite to said tongue (8).

2. Gear pump as claimed in Claim 1, characterized in that the gears (2, 3) are herringbone gears with said groove (7) passing through the intersection of the gear tooth lines, and that the direction of rotation of the gears (2, 3) is such that the portion of each tooth closest to the groove is the last portion of each tooth to enter into engagement.

3. Gear pump as claimed in Claim 1 or 2, characterized in that the dividing-and-sealing members (11') comprise cylinders (10') inserted into the grooves (7).

4. Gear pump as claimed in any one of the preceding claims, characterized in that said dividing-and-sealing members comprise members (10) fitted into the grooves (7) with a sharp edge directed counter to the direction of movement of the gears (2, 3), said members (10) being anchored against being pulled along by the rotating gears by bolts (11) inserted from the outside and fastened in the gear pump housing.

### Ansprüche

1. Zahnradpumpe zum Spritzgiessen und Extrudieren von Kautschuk oder anderen Elastomeren, enthaltend zwei in einem Gehäuse montierte und in Eingriff miteinander stehende Zahnräder (2, 3), zwei Eingangsöffnungen zur Einführung von bandförmigem Ausgangsmaterial (4, 5) in die Zwischenräume zwischen den Zahnrädern (2, 3) und dem Gehäuse sowie Kanalmittel zur Abführung des Produkts aus dem Bereich, wo die Zahnräder im Eingriff sind, wobei die Zahnräder in der Mitte mit Umfangsrillen (7) versehen sind, gegen welche die Zähne abgeschlossen sind, dadurch gekennzeichnet, dass eine Zunge (8) in die genannten Rillen (7) zwischen den Zahnrädern (2, 3) in dem Bereich, wo sie im Eingriff sind, dichtend gesteckt ist, wobei die Zunge (8) auf die Drehrichtung der Zahnräder (2, 3) gerichtet ist ; dass Teil- und Dichtungsvorrichtungen (10, 11) in die Rillen (7) der beiden Zahnräder (2, 3) an Stellen im Gehäuse, die sich zwischen dem Bereich, wo die Zahnräder (2, 3) im Eingriff sind, und den jeweiligen Eingangsöffnungen befinden, gesteckt sind ; und dass die Kanalmittel die Form eines an den Umfangsrillen (7) und der genannten Zunge (8) gegenüber angeordneten Kanals haben.

2. Zahnradpumpe nach Anspruch 1, dadurch gekennzeichnet, dass die Zahnräder (2, 3) Pfeilzahnräder sind, wobei die genannte Rille (7) durch den Schnittpunkt der Zahnlinien durchgeht, und dass die Drehrichtung der Zahnräder (2,3) so ist, dass der Teil jedes der Rille zunächstliegenden Zahns der letzte Teil Zahns ist, der in Eingriff gebracht zu bringen ist.

3. Zahnradpumpe nach Anspruch 1 oder 2, dadurch gekennzeichnet, dass die Teil- und Dichtungsvorrichtungen (11') in die Rillen (7) eingeführte Zylinder (10') umfassen.

4. Zahnradpumpe nach einem der vorhergehenden Ansprüche, dadurch gekennzeichnet, dass die genannten Teil- und Dichtungsvorrichtungen Vorrichtungen (10) umfassen, die in den Rillen (7) mit einer scharfen Schneide gegen die Bewegungsrichtung der Zahnräder (2, 3) gerichtet eingepasst sind, wobei die genannten Vorrichtungen (10), um durch die rotierenden Zahnräder nicht mitgerissen zu werden, von Bolzen (11) festgehalten sind, die von der Aussenseite eingeführt und in dem Gehäuse der Zahnradpumpe befestigt sind.

### Revendications

1. Pompe à engrenages pour moulage par injection et par extrusion du caoutchouc et d'autres élastomères, comportant deux roues d'engrenage (2, 3) montées en prise dans une boîte ; deux trous d'entrée pour l'introduction d'une matière de départ (4, 5) en forme de ruban dans les espaces entre les roues d'engrenage (2, 3) et la boîte, et moyens pour la décharge dudit produit hors de la région où les roues d'engrenage sont en prise, la partie médiane des roues d'engrenage étant munie de rainures circonférentielles (7) contre lesquelles se terminent les dents de roue, caractérisée en ce qu'une languette (8) est insérée de manière étanche dans lesdites rainures (7) entre les roues d'engrenage (2, 3) dans la région où elles sont en prise, ladite languette (8) s'orientant au sens de rotation des roues d'engrenage (2, 3) ; en ce que des éléments de division et d'étanchéité (10, 11) sont insérés dans les rainures (7) des deux roues d'engrenage (2, 3) aux endroits de la boîte situés entre la région où les roues d'engrenage (2, 3) sont en prise, et les trous d'entrée respectifs ; et en ce que lesdits moyens de décharge sont en forme d'un canal disposé à côté des rainures circonférentielles (7) et en face de ladite languette (8).

2. Pompe à engrenages suivant la revendication 1, caractérisée en ce que les roues d'engrenage (2, 3) sont les pignons à chevrons, ladite rainure (7) passant par l'intersection des lignes dentées des pignons, et en ce que le sens de rotation des roues d'engrenage (2, 3) est tel que la partie de chaque dent la plus proche à la rainure est la dernière partie de chaque dent à entrer en prise.

3. Pompe à engrenages suivant l'une quelconque des revendications 1 et 2, caractérisée en ce que les éléments de division et d'étanchéité (11) comportent des cylindres (10') insérés dans les rainures (7).

4. Pompe à engrenages suivant l'une quelconque des revendications précédentes, caractérisée en ce que lesdits éléments de division et d'étanchéité comportent des éléments (10) adaptés aux rainures (7) avec une arête vive orientée au sens de mouvement des roues d'engrenage, lesdits éléments étant ancrés par des boulons (11) insérés du côté extérieur et fixés dans la boîte d'engrenage pour ne pas être entraînés par les roues d'engrenage tournant.

FIG. 1

FIG. 2

FIG. 3

FIG. 4